# EUROPEAN PATENT APPLICATION

(11) **EP 4 752 107 A1**
(43) Date of publication of application: **03.06.2026**
(21) Application number: 25163697.3
(22) Date of filing: 14.03.2025
(51) Int. Cl.: C01G 45/1228, H01M 4/00

(54) **METHOD OF PRODUCING PROTECTIVE SURFACE LAYERS FOR CATHODE MATERIALS FOR LITHIUM-ION CELLS**

(30) Priority: 02.12.2024 PL 45042524
(71) Applicant: Akademia Gorniczo-Hutnicza im. Stanislawa Staszica w Krakowie, 30-059 Krakow (PL)
(72) Inventor: Kulka, Andrzej, 31-235 Kraków (PL); Plotek, Justyna, 32-015 Klaj (PL); Walczak, Katarzyna, 31-543 Kraków (PL)
(74) Representative: Pietruszynska, Elzbieta

(57) **Abstract**

The subject of the invention is a method of producing protective surface layers for cathode materials intended for lithium-ion cells, comprising using an Nb source, a Li source, water and a cathode material for coating, which method comprises: (a) preparing a suspension by successively dispersing ethylene glycol with C₄H₄NNbO₉•H₂O, then adding water, LiOH •H₂O to the suspension obtained , and then a cathode material with the general chemical formula Li₁₊ₓNiₐMn_{b}Co_{c}O₂, where x, a, b, c are numerical values and 0 < x, a, b, c < 1; wherein the individual components during dispersion in step (a) are added at time intervals of at least 5 minutes, and the process is carried out at a temperature in the range from room temperature to 80°C; wherein the water is added in a time interval before adding LiOH•H₂O and after adding C₄H₄NNbO₉ •H₂O; (b) drying the suspension obtained in step (a) in a vacuum and then at a temperature in the range of 80 - 100°C for a period of at least 12 h, thereby obtaining a powder, and then carrying out, (c) annealing the powder obtained in step (c), in an air atmosphere at a temperature in the range of 300 - 600°C for at least 1 h, thereby obtaining a cathode material coated with a protective surface layer comprising Nb in an amount of at most 4% on the surface. The invention further includes a cathode material coated with a protective surface layer comprising Nb, which is obtained by the method according to the invention, and the use of such a material for producing a positive electrode of a lithium-ion cell comprising a cathode material coated with a protective surface layer comprising Nb, conductive carbon and a binder material.

## Description

### Field of invention

The subject of the invention is a new method of producing protective surface layers for cathode materials for lithium-ion cells. In particular, the invention includes a method of producing protective surface layers for cathode materials intended for lithium-ion cells, comprising using an Nb source, a Li source and water, and a Li-rich NMC cathode material.

The invention may find application in cathode materials for lithium-ion (hereinafter referred to as Li-ion) battery cells, which can be used as electrical energy storage devices in portable electronics, as well as electric cars.

### Background of the invention

Electricity storage is becoming a key issue enabling modern economies to develop a low-emission energy system and to a large extent enables the development of electromobility.

Li-ion batteries are the most dynamically developing research area related to powering portable devices and electric cars, and recently also related to energy storage in intelligent power networks, the so-called "smart grid". Electrode materials in Li-ion cells must be characterized by the ability to reversibly store Li ⁺ ions and electrons in their crystal structure, demonstrate high ion-electron conductivity and should be chemically neutral towards the electrolyte.

In the case of cathode materials, currently used material technologies are based on layered transition metal oxides with the chemical formulas Li(NiₓMn_{y}Co_{z})O₂, where Li stands for lithium, Ni stands for nickel, Mn stands for manganese and Co stands for cobalt, and x, y, z = numerical values, and x+y+z=1, hereinafter abbreviated as NMC, which are characterized by varying gravimetric capacity from 150 to 200 mAh/g and potential versus lithium from 3.2 to 3.7 V depending on the exact chemical composition.

The most effective way to improve the performance parameters of Li-ion cells, such as their capacity and power density, while reducing their price and maintaining operational safety, is to optimize the cathode materials used and the electrode/electrolyte interface (in order to limit or eliminate dangerous electrode reactions).

However, the reports and evidence available in the recent scientific literature suggest that NMC materials have reached the limit of their capabilities in terms of the obtained performance parameters, and the capacity of 200 mAh/g achieved for NMC with a high Ni content, e.g. NMC 811, is the maximum value that can be obtained for this type of materials with stable operation during many charge and discharge cycles of the cell. Due to the physicochemical limitations of standard NMC compounds, in order to further improve the performance parameters of Li-ion cells, materials containing more than 1 mole of Li per mole of the compound are used, Li₁₊ₓMe₁₋ₓO₂ (where Me is metal or metal mixture, and x = numerical value, 0<x<0.5), hereinafter referred to as Li-rich NMC.

It was found that in Li-rich NMC cathodes working in Li-ion cells, in contrast to the classical lithium intercalation process, significant modifications of voltage curves occur in the initial charge/discharge cycles. It was also noted that in these materials the recorded discharge capacities exceed the values that would result from calculations assuming only transition metal redox processes. Therefore, during the research work it was proposed that in addition to transition metals, oxygen ions can also participate in electrode reactions, thus increasing the obtained capacity as well as explaining the modification of voltage characteristics and electrochemical activation observed, e.g. for Li₂MnO₃ . Moreover, due to the fact that electrode reactions begin at the electrolyte/cathode interface, it seems that surface atoms of Li-rich NMC materials should have a significant effect on such processes.

Due to the fact that the surface atoms of cathode materials affect the surface electrode reactions (including redox reactions involving lattice oxygen) and the structure of the layer between the cathode and the electrolyte, surface modifications of Li-rich NMC materials are crucial for improving the operating parameters of these materials. Several materials are used among the coatings, including zirconium, aluminum and niobium compounds. Several methods of coating cathode materials are known.

### Present state of art

Among them, sol-gel methods are often used, as described by, among others, the authors of patent application JP2015072818A. The sol-gel solution contains a precursor of the coating layer (i.e. a compound containing a conducting ion), preferably an alkoxide, and a compound containing a Li⁺ ion . Polar solvents are used in the method, and the coating is applied by coating in a fluidized bed.

The authors of the publication Journal of Energy Chemistry 40 (2020) 39-45 coated NMC particles with oxide of LiNbO₃ (in a weight ratio of 1% coating relative to the NMC material) in the following way: in an argon atmosphere, lithium metal and Nb(C₂H₅O)₅ were mixed in ethanol. Then, the NMC cathode material was added to the solution, and the obtained gel was annealed in a furnace under oxygen flow.

The authors of the publication Nanomaterials 2021, 11, 548 used lithium and niobium ethoxides as coating precursors. Then, after dissolving in ethanol, the solutions were mixed and hydrogen peroxide (hydrogen peroxide water) was added to them. In the next step, the cathode material was added to the solution and after mixing, it was heated in the furnace. A LiNbO₃ coating was obtained in a weight ratio of about 0.5% by weight relative to the weight of the cathode material.

The method of making the coating using the hydrolysis reaction described by Xin et al. (ACS Appl. Mater. Interfaces 2019, 11, 34889-34894) is known. The cathode material was mixed with lithium niobium ethoxide and a trace amount of water. As a result of annealing and calcination, the NMC cathode material with a Li-Nb-O coating was obtained with a coating content of 1 to 3 wt%.

Kato et al. (Solid State Ionics 308 (2017) 54-60) prepared the coatings using the Pulsed Laser Deposition (PLD) thin film deposition technique, where Li₃NbO₄ is evaporated as a precursor.

The authors of the publication Scientific Reports (2021) 11(1) prepared a coating from LiNbO₃ in the following way. The NMC cathode material and lithium ethoxide were added to the niobium ethoxide solution. After dispersing the powders using ultrasonication, the product was dried in vacuum. The obtained powder was annealed in air.

Patent description US10283772B2 describes a method of obtaining a LiNbO₃ coating using a hydrothermal method, where the source of niobium is Nb₂O₅.

Patent application US2023327181A1 describes a method of preparing materials consisting of two coatings on NMC particles, the outer ones of which may contain niobium oxide.

The prior art methods for producing a coating on the surface of cathode materials are often multi-step and require the use of expensive technologies or reagents (P. Guan et al. Journal of Energy Chemistry, 43, 2020, 220-235) and are therefore unsatisfactory from the application point of view.

Furthermore, in the prior art there is no information that a specific, easy-to-use method of producing protective surface layers would enable a significant improvement in the performance properties of cathode materials for lithium cells with high energy densities.

Meanwhile, there is a need to search for new solutions that enable the production of new cathode materials that enable the production of lithium batteries with high energy densities and long service life.

In the course of previous research work, a number of materials have been developed that are characterized by discharge capacities > 200 mAh/g (K. Redel et al. Journal of The Electrochemical Society, 166, 2019, A5333, K Redel, et al. Chemical Engineering Journal 424, 2021, 130293 and A. Arifiadi, et al. Advanced Functional Materials 2024, 2413958), however, a significant decrease in capacity is observed during cyclic charge/discharge.

Previous studies suggest (P. Guan et al. Journal of Energy Chemistry, 43, 2020, 220-235) that the use of coating on active material particles can positively affect the stability of material capacity during the cycle. The formation of coatings on the surface of Li-rich NMC containing Nb compounds is intended to create buffer layers separating the highly electrochemically active cathode material from the electrolyte, and thus limiting undesirable surface reactions, such as dissolution of 3d metals (Manganese - Mn, Cobalt - Co or Nickel - Ni) in the electrolyte or oxidation of the electrolyte by oxygen formed in the redox reactions of lattice oxygen. Moreover, due to the inter-ionic diffusion in solids occurring at high temperatures (occurring during the production of the material), niobium (Nb), aluminum (Al), titanium (Ti) or zirconium (Zr) ions present in the surface layers can dope the areas inside the grains of the cathode material.

Moreover, most of the prior art works recommend avoiding contact of water with cathode materials, because during contact with water, lithium carbonate Li₂CO₃ is formed on the surface of the cathode materials, which deteriorates the functional properties of the obtained cathodes (W. B Hawley et al, Journal of Power Sources, 466 (2020) 228315).

In the solution proposed here, surprisingly, the use of a cheap and water-soluble C₄H₄NNbO₉•H₂O compound as a source of niobium and the use of ethylene glycol as well as the addition of water in the process of forming the surface layer solve the problems described above, and the obtained cathode materials are characterized by better performance parameters.

Therefore, the object of the present invention is to provide a new method of making a niobium-based coating for a cathode material for lithium-ion cells.

### Disclosure of the Invention

According to the present invention, the essence of the invention is a method for producing protective surface layers for cathode materials intended for lithium-ion cells, comprising using an Nb source, a Li source, water and a cathode material for coating, which the method is characterized in that it comprises:
(a) preparing a suspension by dispersing successively ethylene glycol with C₄H₄NNbO₉•H₂O, then to the obtained suspension adding successively water, LiOH•H₂O, and then a cathode material of the general chemical formula Li₁₊ₓNiₐMn_{b}Co_{c}O₂, where x, a, b, c are numerical values and 0< x, a, b, c< 1;
   wherein the individual components during dispersion in step (a) are added at time intervals of at least 5 minutes, and the process is carried out at a temperature in the range of room temperature to 80°C;
   wherein the water is added in a time interval before the addition of LiOH•H₂O and after the addition of C₄H₄NNbO₉•H₂O;
(b) drying the suspension obtained in step (a) in vacuum and then at temperature in a range of 80 - 100°C for a period of at least 12 h, thereby obtaining a powder, followed by,
(c) annealing the powder obtained in step (b) in an air atmosphere at temperature in a range of 300 - 600°C for at least 1 hour to obtain a cathode material coated with a protective surface layer containing Nb in an amount of at most 4% on the surface.

Preferably, according to the method, in step (a) Li_{1.14}Ni_{0.13}Mn_{0.54}Co_{0.13}O₂, Li_{1.05}Mn_{0.55}Ni_{0.32}Co_{0.043}O₂, Li_{1.15}Mn_{0.55}Ni_{0.18}Co_{0.1}O₂ or Li_{1.12}Mn_{0.51}Co_{0.17}Ni_{0.17}O₂ is used as the cathode material.

Most preferably, according to the method, in step (a) Li_{1.14}Ni_{0.13}Mn_{0.54}Co_{0.13}O₂ is used as the cathode material.

Preferably, according to the method, in step (a) the individual components during dispersing are added at time intervals of 5 to 15 minutes.

Preferably, according to the method, the process in step (a) is carried out at temperature of 40°C is used.

Preferably, according to the method, in step (b) drying temperature of 80°C is used.

Preferably, according to the method, in step (b) 16-hour drying is used.

Preferably, according to the method, in step (c) annealing temperature of 500°C is used.

Preferably, according to the method, in step (c) annealing is carried out for 3 hours.

Preferably, according to the method, in step (a) ultrasonication is used to prepare the suspension.

The invention further comprises a cathode material coated with a protective surface layer comprising Nb, characterized in that it is obtainable by the method according to the invention.

The invention also includes a use of a cathode material coated with a protective surface layer comprising Nb, as defined above, to produce a positive electrode of a lithium-ion cell comprising a cathode material coated with a protective surface layer comprising Nb, a conductive carbon and a binder material.

### Beneficial effects and advantages of the invention

Adding water at the step of preparing the suspension from which the cathode material coating is produced enables the use of cheaper water-soluble niobium precursors.

The present invention is described in the embodiments below and illustrated in the accompanying drawings, wherein:

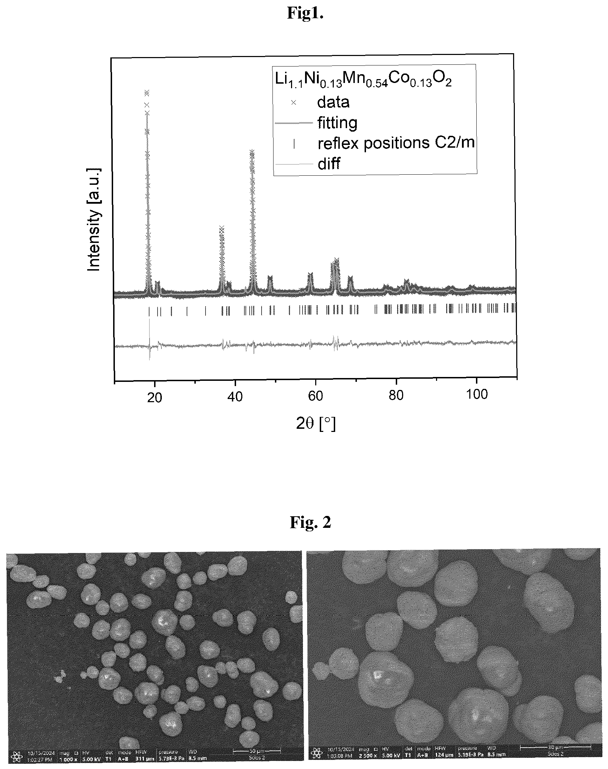

- Fig. 1: shows the X-ray diffraction (XRD) results for the synthesized Li-rich NMC cathode material with the nominal chemical composition Li_{1.14}Ni_{0.13}Mn_{0.54}Co_{0.13}O₂. The graph shows the measured data, the fit of the measured data obtained by the Rietveld method, the theoretical positions of the diffraction reflections for the C2/m structure and the difference curve ("diff") illustrating the difference between the measured data and the fit.
- Fig. 2: shows images at different magnifications (1000 and 2500 magnification) taken using the scanning electron microscopy (SEM) technique, which show the microstructure of the produced precursor of the Li-rich NMC cathode material.

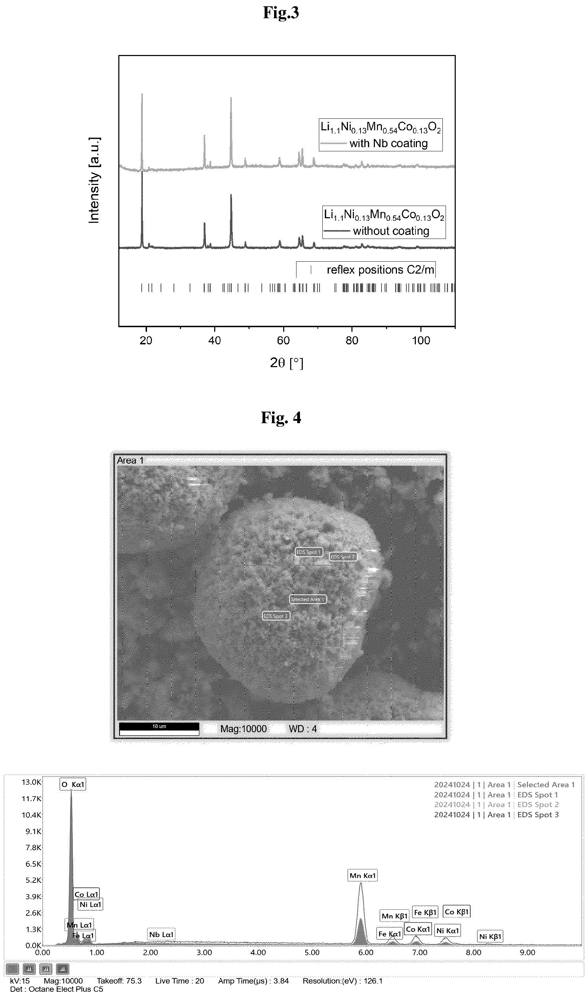

- Fig. 3: shows the XRD results obtained for the synthesized Li-rich NMC cathode materials with the nominal chemical composition Li_{1.14}Ni_{0.13}Mn_{0.54}Co_{0.13}O₂ with and without the Nb-containing coating prepared according to Example 1 of the present invention. The graph shows the theoretical positions of the diffraction reflections for the C2/m structure.
- Fig. 4: shows SEM images with Energy Dispersive Spectroscopy (EDS) analysis for a Li-rich NMC with a nominal chemical composition of Li_{1.14}Ni_{0.13}Mn_{0.54}Co_{0.13}O₂ with a Nb-containing coating prepared according to Example 1 of the present invention.

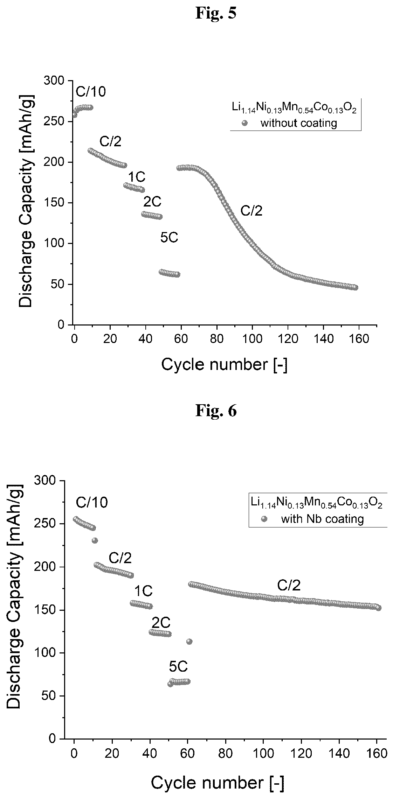

- Fig. 5.: shows the discharge capacity of a lithium cell containing a Li-rich NMC material with a nominal chemical composition of Li_{1.14}Ni_{0.13}Mn_{0.54}Co_{0.13}O₂ as a function of the number of cycles for different load currents C/10, C/2, 1C, 2C and 5C, the current 1C being the current value, converted to the mass of cathode material in the lithium cell, necessary to change the lithium content by 1 mole per mole of the Li_{1.14}Ni_{0.13}Mn_{0.54}Co_{0.13}O₂ compound .
- Fig. 6: shows the discharge capacity of a lithium cell comprising a Li-rich NMC material having a nominal chemical composition of Li_{1.14}Ni_{0.13}Mn_{0.54}Co_{0.13}O₂ with an Nb-containing coating prepared according to Example 1 of the present invention as a function of the number of cycles for different load currents C/10, C/2, 1C, 2C and 5C.

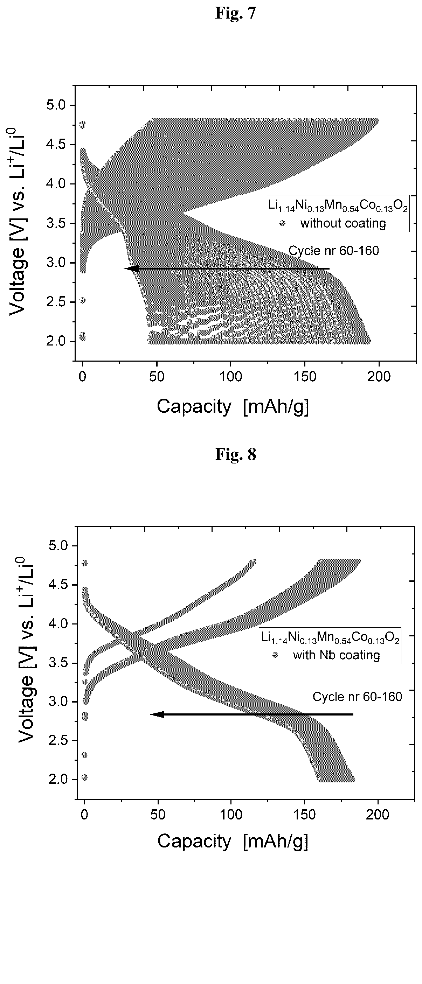

- Fig. 7.: shows a graph illustrating the voltage of a lithium cell containing a Li-rich NMC material with a nominal chemical composition of Li_{1.14}Ni_{0.13}Mn_{0.54}Co_{0.13}O₂ as a function of capacity for 60 - 160 charge/discharge cycles at the C/2 current of Fig. 5.
- Fig. 8: shows a graph illustrating the voltage of a lithium cell comprising a Li-rich NMC material with a nominal chemical composition of Li_{1.14}Ni_{0.13}Mn_{0.54}Co_{0.13}O₂ with a coating containing Nb prepared according to Example 1 of the present invention as a function of capacity for 60 - 160 charge/discharge cycles with the C/2 current of Fig. 6.

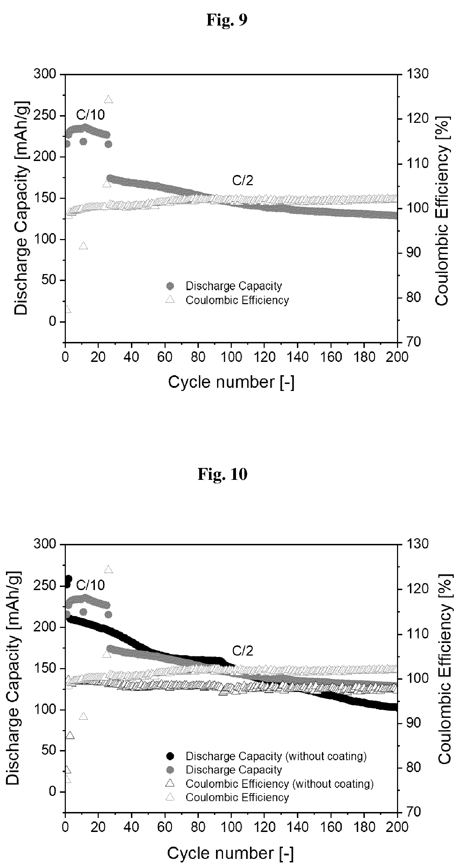

- Fig. 9: shows the discharge capacities and Coulomb efficiency of a lithium cell comprising a Li-rich NMC with a nominal chemical composition of Li_{1.14}Ni_{0.13}Mn_{0.54}Co_{0.13}O₂ with a coating comprising Nb prepared according to Example 1 of the present invention as a function of the number of cycles for two different load currents C/10 and C/2.
- Fig. 10: shows the discharge capacities and Coulomb efficiency of lithium cells containing Li-rich NMC material with the nominal chemical composition of Li_{1.14}Ni_{0.13}Mn_{0.54}Co_{0.13}O₂ without coating (reference material) and the material with a coating containing Nb prepared according to Example 1 of the present invention as a function of the number of cycles for two different load currents C/10 and C/2.

### Embodiments of the invention

The materials necessary to produce the cathode materials and surface layers were supplied by POCH and Sigma Aldrich and were used without further treatment.

Reagents used:
C₄ H₄NNbO₉•H₂O - (Manufacturer: Sigma Aldrich, CAS No.: 168547-43-1, purity: 99.99%) Ethylene glycol - (Manufacturer: POCH, CAS No.: 107-21-1, purity: CZDA, pure for analysis) Distilled water - (Conductivity below 5 µS/cm)
LiOH·H₂O - (Manufacturer: Sigma Aldrich, CAS No.: 1310-66-3 , purity: ≥98%)
NiSO₄ 6H₂O - (Manufacturer: Sigma Aldrich, CAS No.: 10101-97-0, purity: ≥98%)
MnSO₄ H₂O - (Manufacturer: Sigma Aldrich, CAS No.: 10034-96-5, purity: >99%)
CoSO₄ 7H₂O - (Manufacturer: Sigma Aldrich, CAS No.: 10026-24-1, purity: >99%)
Na₂CO₃ - (Manufacturer: Sigma Aldrich, CAS No.: 497-19-8, purity: ≥99.5%)
NH₃ - (Manufacturer: POCH, CAS No.: 1336-21-6, purity: 25% solution, pure basic) *Li-rich NMC cathode material was prepared in the laboratory according to the following procedure:*

The Li-rich NMC cathode material with nominal chemical composition Li_{1.14}Ni_{0.13}Mn_{0.54}Co_{0.13}O₂ used in the following examples was prepared in a two-step synthesis process. In the first step, the precursor of the Li-rich NMC material in the form of a transition metal carbonate: TMCO₃ (TM- transition metal, TM = Mn, Ni, Co) with appropriate molar ratios of transition metals was prepared by co-precipitation method.

In order to obtain a spherical grain shape of the Li-rich NMC cathode material, it is necessary to produce a spherical grain shape of the transition metal carbonate TMCO₃ in a co-precipitation reaction. The spherical grain shape of the Li-rich NMC cathode material provides high electrode reaction rates and is therefore advantageous from an application point of view. The co-precipitation reaction was carried out according to the protocol: the following aqueous solutions were prepared: a solution of transition metal sulfates (MnSO₄ , NiSO₄ and CoSO₄ ) with a concentration in the range of 2-3 mol/L, a solution of Na₂CO₃ with a concentration in the range of 2-3 mol/L and a solution of NH ₃ with a concentration in the range of 2-13 mol/L. The prepared solutions of transition metal sulfates and NH₃ were added dropwise at a rate ranging from 0.01 ml/min to 1 ml/min to a 500-1000 ml reaction vessel containing distilled water stirred at 1000 rpm using a mechanical stirrer. At the same time, the Na₂CO₃ solution was automatically dosed to maintain the pH of the solution in the range of 7.5-8.3. After the reaction was complete, the obtained transition metal carbonate - TMCO₃ was filtered from the solution, rinsed with distilled water and dried in a vacuum dryer at a temperature in the range of 80-100°C under vacuum conditions (pressure ~50 mbar).

In the second step, the obtained transition metal carbonate TMCO₃ was mixed with lithium carbonate Li₂CO₃ and annealed at a temperature of 800-860°C in an air atmosphere for 6-15 hours.

In accordance with the invention, a cathode material having the general chemical formula Li₁₊ₓNiₐMn_{b}Co_{c}O₂ can be used, where x, a, b, c are numerical values and 0< x, a, b, c< 1. The above-produced Li-rich NMC cathode material having the nominal chemical composition Li_{1.14}Ni_{0.13}Mn_{0.54}Co_{0.13}O₂ was used in Example 1 below. Li_{1.14}Ni_{0.13}Mn_{0.54}Co_{0.13}O₂, Li_{1.05}Mn_{0.55}Ni_{0.32}Co_{0.043}O₂, Li_{1.15}Mn_{0.55}Ni_{0.18}Co_{0.1}O₂ , or Li_{1.12}Mn_{0.51}Co_{0.17}Ni_{0.17}O₂ which is produced as above in the case of Li_{1.14}Ni_{0.13}Mn_{0.54}Co_{0.13}O₂, can also be used as cathode material.

### Example 1

The first step of coating production was carried out at 40°C using an ultrasonic cleaner. 0.0535 g of C₄H₄NNbO₉•H₂O was added to a beaker containing 2.5 ml of ethylene glycol and the resulting suspension was subjected to dispersion. After 15 min, 0.622 ml of H₂O was added to the suspension, and after another 15 min, 0.00744 g of LiOH•H₂O was added to the suspension. Then, further dispersion was carried out for another 15 min and 0.5 g of Li-rich NMC cathode material was added. The suspension prepared in the above manner was left in the ultrasonic cleaner for 30 min. Then the mixture was poured into an evaporating dish and dried in vacuum at 80°C for 16 h. The obtained powder was heated in a tube furnace in an air atmosphere at 500°C for 3 h.

### Example 2

Using the material obtained in accordance with Example 1, a positive electrode layer (cathode) of a lithium cell was manufactured from the following components: cathode material, Super P Li conductive carbon (Manufacturer: Imerys Carbon), polyvinylidene fluoride (PVDF, Arkema HSV 900) binder, in a weight ratio of 8:1:1.

0.4 g of the material obtained according to Example 1 above was mixed with 0.05 g of Super P Li conductive carbon and 0.5 g of 10% solution of binder material (PVDF , Arkema HSV 900) in N-methyl-2-pyrrolidone (NMP, *N-methyl-2-pyrrolidone,* manufacturer: Sigma Aldrich, CAS No.: 872-50-4, purity: >99%). Mixing was carried out using a homogenizer at a rotational speed of 15,000 rpm for 8 min. The obtained mass was spread on an aluminum foil using a squeegee (wet layer thickness was 300 µm) and dried at 110°C in vacuum for 16 h. Electrodes with a diameter of 13 mm were subjected to measurements of electrochemical properties in lithium cells with a counter electrode made of metallic lithium. The electrolyte was a 1.2M solution of LiPF₆ salt (manufacturer: Sigma Aldrich, CAS No.: 21324-40-3, purity: battery grade, ≥ 99.99%) in organic solvents: ethylene carbonate (EC, *Ethylene carbonate,* manufacturer: Sigma Aldrich, CAS No.: 96-49-1, purity: battery grade, ≥ 99%) and ethyl methyl carbonate (EMC, *Ethyl methyl carbonate,* manufacturer: Sigma Aldrich, CAS No.: 623-53-0, purity: battery grade, ≥ 99.9%) in a volume ratio (3:7) with the addition of 1% by weight of Tris(trimethylsilyl)phosphite (TTSPi, *tris(trimethylsilyl)phosphite,* manufacturer: Sigma Aldrich, CAS No.: 1795-31-9, purity: > 95.0%).

### Physicochemical characteristics of the uncoated cathode material and the one containing Nb surface layers prepared according to Example 1:

Based on the results of X-ray diffraction (XRD - X-ray diffraction), it was found that the produced Li-rich NMC cathode materials are characterized by a crystalline structure that can be described by the space group C2/m (Fig.1). Studies using scanning electron microscopy (SEM - Scanning Electron Microscopy) confirmed that the obtained transition metal carbonates TMCO₃ have a spherical grain shape with an average size of 10 µm (Fig. 2).

Analyzing the results of X-ray diffraction (XRD - X-ray diffraction) for cathode materials on which Nb-containing coatings were produced, it was found that the coated Li-rich NMC cathode materials are characterized by a crystalline structure that can be described by the space group C2/m (Fig.3). No additional diffraction reflections originating from crystalline phases containing Nb were observed, therefore, the obtained surface coatings containing Nb are most likely amorphous layers. Based on the results of scanning electron microscopy (SEM - Scanning Electron Microscopy) studies together with the analysis of energy dispersion enabling the analysis of the chemical composition (EDS - Energy Dispersive Spectroscopy) showed the preservation of the spherical shape of the cathode material grains and the occurrence of ~1 wt.% Nb on the surface of the tested cathode materials (Fig. 4).

### Electrochemical characterization of the uncoated cathode material and the one containing Nb surface layers prepared according to examples 1 and 2

Fig. 5 - 6 presents the results of the discharge capacity of lithium cells containing the uncoated Li_{1.14}Ni_{0.13}Mn_{0.54}Co_{0.13}O₂ material and with the Nb-containing coating prepared according to Example 1 as a function of the number of cell charge/discharge cycles for different load currents: C/10, C/2, 1C, 2C and 5C. It can be seen that the discharge capacities are slightly higher, amounting to ~260 mAh/g for the initial charge/discharge cycles for the uncoated material compared to the Nb-containing coating. As the current load increases (from C/10 to 5C), the discharge capacity of the cells decreases, which results from the limited kinetics of the electrode processes and is commonly observed for lithium batteries with Li-rich NMC cathodes (K. Redel et al. Journal of The Electrochemical Society, 166, 2019, A5333 and A. Arifiadi, et al. Advanced Functional Materials 2024, 2413958). Significant differences between the uncoated and Nb-containing coated materials prepared according to Example 1 become visible during cycles from 60 to 160. It can be seen that the lithium cell with the uncoated cathode material rapidly loses capacity during the subsequent cycles (from 60 to 160), while the lithium cell with the coated cathode material shows a negligible decrease in discharge capacity. At the same time, Fig. 7-8 shows the voltage of lithium cells recorded from the 60th to the 160th charge/discharge cycle with the C/2 current. It can be seen a significant modification of the dependence of the lithium cell voltage and a decrease in the average operating voltage of the lithium cell with the uncoated material for the subsequent cycles, while the lithium cell with the Nb-coated material is characterized by a stable voltage vs. capacity characteristic for the subsequent cycles. The results presented in Fig. 5 - 8 suggest that the produced Nb-containing coatings prepared in accordance with Example 1 increase the stability of the obtained lithium batteries. According to literature reports (D. Lv, et al. Advanced Energy Materials 2015, 5 and A. Arifiadi, et al. Advanced Functional Materials 2024, 2413958), the capacity drops observed for lithium cells with a Li-rich NMC cathode and a lithium metal anode are caused by the dissolution of transition metals (Me) in the electrolyte from the surface of the Li-rich NMC cathodes and their subsequent deposition on the surface of the lithium metal anode. Transition metals form weakly conductive passivation layers on the surface of the lithium metal, which limit the performance of lithium cells. The capacity maintenance effect observed in the case of a lithium cell with a cathode material Li_{1.14}Ni_{0.13}Mn_{0.54}Co_{0.13}O₂ with a coating containing Nb prepared in accordance with Example 1 is related to the presence of protective surface layers containing Nb, which limit the dissolution of transition metals in the electrolyte.

The results presented in Fig. 9 - Fig. 10 show the change of discharge capacity and Coulomb efficiency of lithium batteries with the material obtained with the Nb-containing coating prepared according to Example 1 and the reference material - without coating during long-term cycling. In both cases, a decrease in discharge capacity can be observed when the current density is increased from C/10 to C/2. Based on the results presented in Fig. 9, it can be seen that lithium batteries operating with uncoated cathode materials are characterized by discharge capacities of the order of 260 mAh/g in the initial charge/discharge cycles at the current C/10. Lithium batteries with coated cathodes manufactured in accordance with the presented claim are characterized by discharge capacities of the order of 240 mAh/g in the initial charge/discharge cycles at C/10 current, while after 200 cyclic charges/discharges the discharge capacity reaches a value of about 140 mAh/g at C/2 current, exceeding the capacities obtained for lithium batteries with uncoated cathodes. Based on the presented results, it can be stated that the formation of surface layers on the tested Li-rich NMC cathode materials improves the retention of the discharge capacity of lithium batteries during long-term cyclic charge/discharge.

## Claims

1. A method of producing protective surface layers for cathode materials intended for lithium-ion cells, comprising using an Nb source, a Li source, water and a cathode material for coating, **characterized in that** it comprises:
(a) preparing a suspension by dispersing successively ethylene glycol with C₄H₄NNbO₉•H₂O, then to the obtained suspension adding successively water, LiOH•H₂O, and then a cathode material of the general chemical formula Li_{1 + x}NiₐMn_{b}Co_{c}O₂, where x, a, b, c are numerical values and 0< x, a, b, c< 1;
wherein the individual components during dispersion in step (a) are added at time intervals of at least 5 minutes, and the process is carried out at a temperature in the range of room temperature to 80°C;
wherein the water is added in a time interval before the addition of LiOH•H₂O and after the addition of C₄H₄NNbO₉•H₂O;
(b) drying the suspension obtained in step (a) in vacuum and then at temperature in a range of 80 - 100°C for a period of at least 12 h, thereby obtaining a powder, followed by,
(c) annealing the powder obtained in step (c) in an air atmosphere at temperature in a range of 300 - 600°C for at least 1 h to obtain a cathode material coated with a protective surface layer containing Nb in an amount of at most 4% on the surface.

2. The method according to claim 1, **characterized in that** in step (a) the cathode material is Li_{1.14}Ni_{0.13}Mn_{0.54}Co_{0.13}O₂ , Li_{1.05}Mn_{0.55}Ni_{0.32}Co_{0.043}O₂, Li_{1.15}Mn_{0.55}Ni_{0.18}Co_{0.1}O₂ or Li_{1.12}Mn_{0.51}Co_{0.17}Ni_{0.17}O₂.

3. The method according to claim 2, **characterized in that** in step (a) Li_{1.14}Ni_{0.13}Mn_{0.54}Co_{0.13}O₂ is used as the cathode material.

4. The method according to claim 1 or 2, **characterized in that** in step (a) the individual components are added during dispersing at time intervals of 5 to 15 minutes.

5. The method according to claim 1-4, **characterized in that** the process in step (a) is carried out in temperature of 40°C.

6. The method according to claim 1-5, **characterized in that** in step (b) drying temperature of 80°C is used.

7. The method according to claim 1-6, **characterized in that** in step (b) drying is carried out for 16 hours.

8. The method according to claim 1-7, **characterized in that** in step (c) annealing temperature of 500°C is used.

9. The method according to claim 1-8, **characterized in that** in step (c) the annealing is carried out for 3 hours.

10. The method according to any one of claims 1 to 9, **characterized in that** in step (a) ultrasonication is used to prepare the suspension.

11. A cathode material coated with a protective surface layer comprising Nb, **characterized in that** it is obtained by the method according to claim 1.

12. A use of the cathode material coated with a protective surface layer comprising Nb according to claim 11 for producing a positive electrode of a lithium-ion cell comprising a cathode material coated with a protective surface layer comprising Nb, a conductive carbon and a binder material.
